# EUROPEAN PATENT SPECIFICATION

(11) **EP 0 686 580 B1**
(45) Date of publication and mention of the grant of the patent: **22.03.2000**
(21) Application number: 95303761.1
(22) Date of filing: 01.06.1995
(51) Int. Cl.: B65F 1/14, F16B 7/20

(54) **A cylindrical assembly having interconnectable parts**
Zylindrischer Satz von miteinander verbindbaren Teilen
Ensemble cylindrique avec pièces interconnectables

(30) Priority: 11.06.1994 GB 9411745
(43) Date of publication of application: 13.12.1995
(73) Proprietor: GLASDON GROUP LIMITED, Blackpool Lancashire FY4 4UR (GB)
(72) Inventor: Dixon, Robert, Preston, Lancashire PR1 9UB (GB); Gill, Stephen John, St. Annes, Lytham St. Annes FY8 3JW (GB)
(74) Representative: Mock, Hans

(56) References cited:
- DE-U- 9 305 657
- GB-A- 2 203 136
- GB-A- 2 217 773
- US-A- 3 703 974
- US-A- 3 824 815

## Description

This invention relates to an assembly of two interfitting generally cylindrical components intended for use, for example, as a litter bin.

It is well known for litter bins to be of hollow, generally cylindrical construction with a cylindrical base adapted to be anchored to the ground and a cylindrical body, with one or more openings for litter at the top thereof, arranged to fit into or over the base. The upper and lower parts of the litter bin are interlocked in the engaged position in order to prevent unauthorised removal of the upper part of the bin. It is nevertheless desirable that the upper part of the bin be easily removable from the base by service personnel in order to permit access to an internal liner containing the litter.

It is an object of the present invention to provide an assembly of two interfitting generally cylindrical components, particularly but not exclusively for use in a litter bin, which can be engaged and disengaged in a simple and convenient manner without resort to a key operated locking system.

US-A-3824815 describes locking apparatus designed to prevent unauthorised unlocking movement between two cylindrical members. A first member has a labyrinth relief formation defined on its cylindrical surface and the second member has a locking pawl designed to engage with the labyrinth. Unlocking of the members requires a known combination of rotational and axial movement between the members so as to release the pair from the labyrinth.

According to the present invention there is provided an assembly comprising two interfitting generally cylindrical components having sufficient clearance between their mating surfaces to permit relative rotation, at least one retractable locking projection provided on one of said surfaces and biased into a projecting position in which it interlocks with the other of said surfaces, and locking formations on said other surface including at least one corresponding labyrinth of barriers to circumferential and axial movement through which labyrinth(s) said projection(s) may be manoeuvred by a known sequence of axial and rotational relative movements of said components for disengagement thereof, the arrangement of the projection(s) and the locking formations being such that said axial disengaging movement cannot cause retraction of the projection(s) but axial movement in the reverse direction results in temporary deflection of the projection(s) into the retracted position by the locking formations thereby permitting re-engagement of the components to be accomplished by relative axial movement alone, characterised in that the or each projection has a contact surface inclined in the direction of engagement movement of the locking formations so as to enable the locking formations to exert a progressively increasing deflection force on the projection(s) during engagement, the or each projection having a free end for engagement with the mating surface and being mounted with axial spacing from said free end, the or each projection having mounting means at the end opposite said free end and a hinge intermediate its ends, the hinge interconnecting relatively moveable portions of the projection(s), and having interlocking formations that serve to limit the extent of the projecting position of the projection(s).

The or each projection is preferably integrally moulded in plastics material.

Adjacent ends of said portions preferably have interlocking formations to resist reverse deflection of the projection.

The labyrinth preferably includes a circumferential barrier which is only avoidable by axial movement in the direction of re-engagement.

The assembly preferably includes a plurality of projections and corresponding labyrinths are unevenly spaced circumferentially so as to provide a limited number (less than said plurality) of start points for disengagement of said components.

In accordance with a further aspect of the invention there is provided a litter bin comprising a hollow body made from an assembly as claimed in any one of the preceding claims, the cylinder axis of said components being arranged vertically and one of said components providing a base into or over which the other component fits.

The invention will now be further described by way of example only, with reference to the accompanying drawings, in which:-
Fig. 1 is a side view of one embodiment of litter bin in accordance with the invention;
Fig. 2 is a corresponding view of the same litter bin with the base (indicated in dotted line) removed;
Fig. 3 is a side view to an enlarged scale of the lower end of the upper part of the bin of Fig. 2;
Fig. 4 is an underneath plan view of the upper part of the litter bin body shown in Figs. 1 and 2;

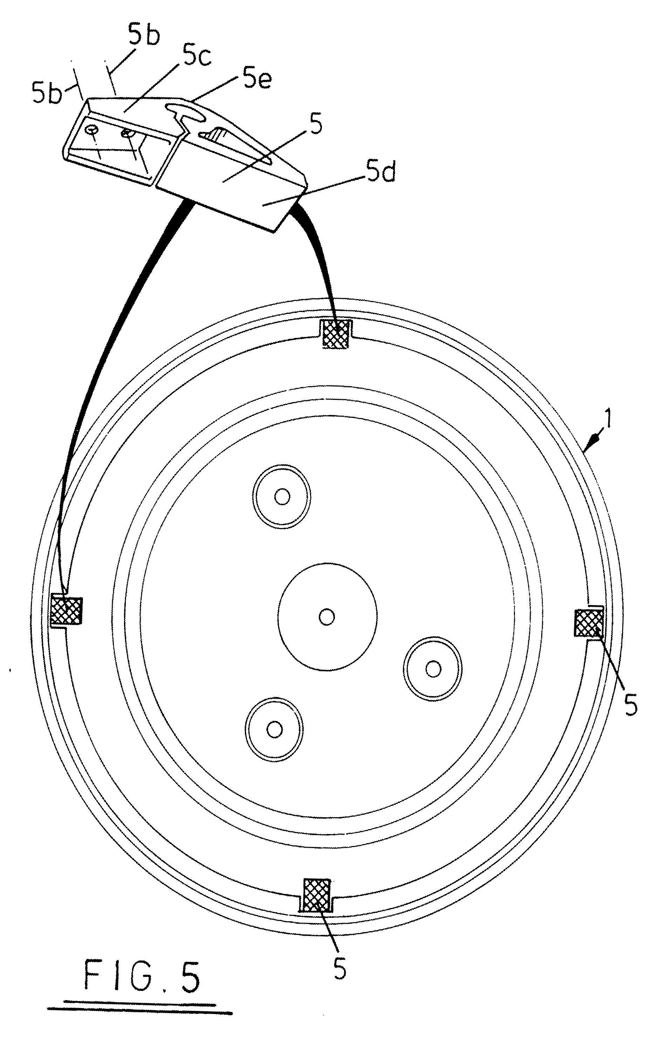

Fig. 5 is a plan view from above of the base of the litter bin body with inserts showing locking projections to an enlarged scale;
Fig. 6 shows part of the litter bin in longitudinal section to show the method of interlocking of the body components, details of the locking projection being shown to an enlarged scale and designated Figs. 6a, b and c, and
Figs. 7 and 8 are diagrams showing the engaged condition of the body components and the manner of disengagement thereof respectively.

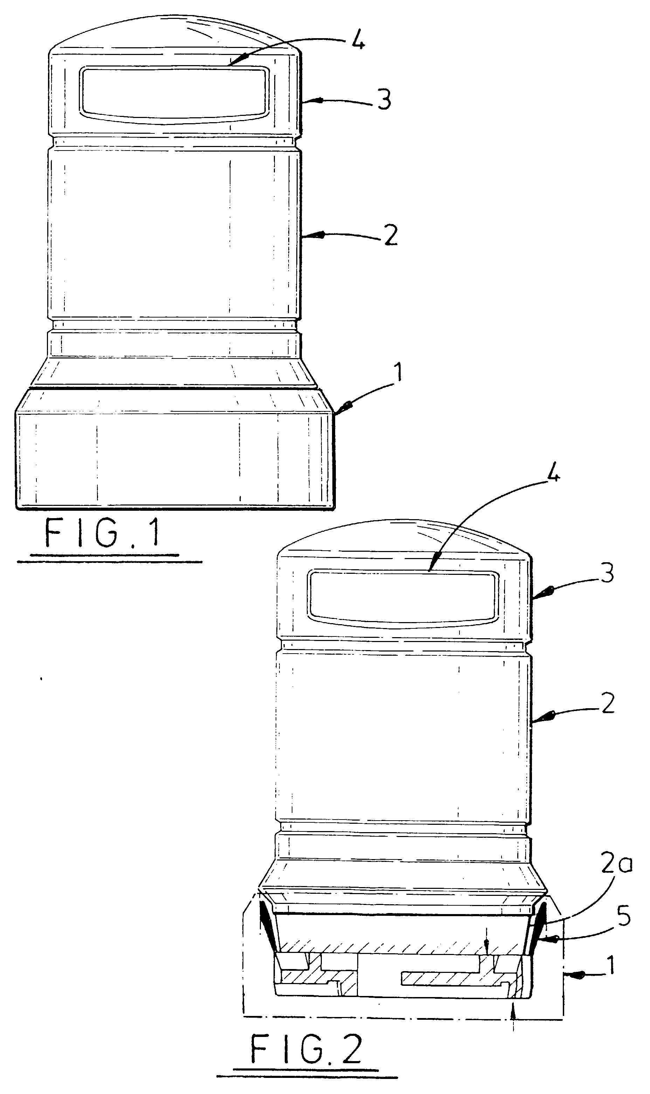

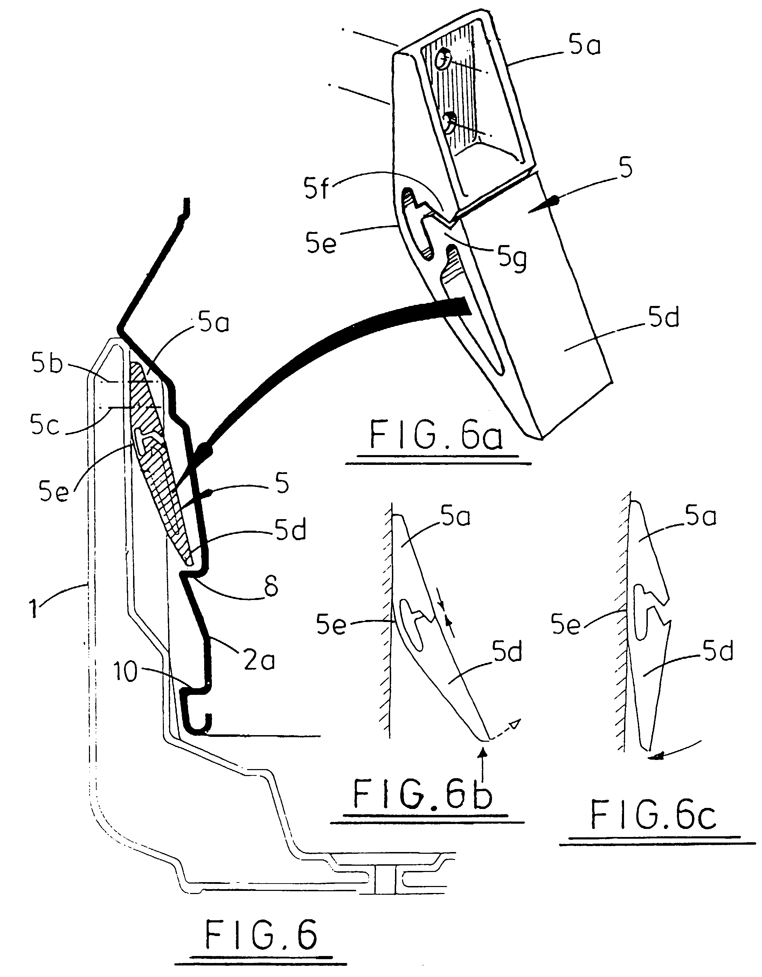

Referring now to the drawings, Fig. 1 shows a litter bin of generally cylindrical shape with an enlarged base portion 1 and an upper body portion 2. The upper body portion 2 includes a top 3 with two openings 4 at opposite sides thereof. The body portions 1, 2 are of hollow construction and receive a removable litter container (not shown) with an open top immediately below the level of the openings 4. In order to empty the litter container, the upper body portion 2 is removed from the base 1 in the manner described below. The upper and lower portions 1, 2 of the litter bin are rotationally moulded in synthetic plastics material and the base portion 1 is of double skin construction for added strength as shown in Fig. 6. The lower end 2a of the upper body portion 2 fits into the base portion 1 as seen in Figs. 2 and 6. The interengaging parts of the base and body portions 1 and 2 are of generally cylindrical shape and the mating surfaces have sufficient clearance to admit of easy relative rotation of the base and body portions 1, 2.

A locking system for interlocking the base and body portions 1, 2 of the litter bin comprises four equally spaced projections 5 mounted on the inner wall of the base portion 1 and corresponding locking formations in the form of labyrinths 7 on the outer surface of the lower end of the body portion 2. Each projection 5 comprises an integrally moulded body of synthetic plastics material having an upper portion 5a fixedly secured to the inner wall of the base 1 by fasteners (not shown) extending on lines 5b, 5c through openings in the upper portion 5a of the projection 5. The projection 5 also has a lower portion 5d connected to the upper portion 5a by a thin, flexible web 5e providing a hinge enabling resilient retraction of the lower portion 5d in the clockwise direction as seen in Figs. 6 and 6c. The lower portion 5d of the projection 5 has a contact surface inclined in the direction of engagement movement of the lower end 2a of the upper body portion 2. Adjacent ends of the upper and lower portions 5a, 5b of the projection 5 are configured as tapered jaws 5f, 5g which are engageable as shown in Fig. 6b to prevent deflection of the portion 5d in the anticlockwise direction indicated by the arrow.

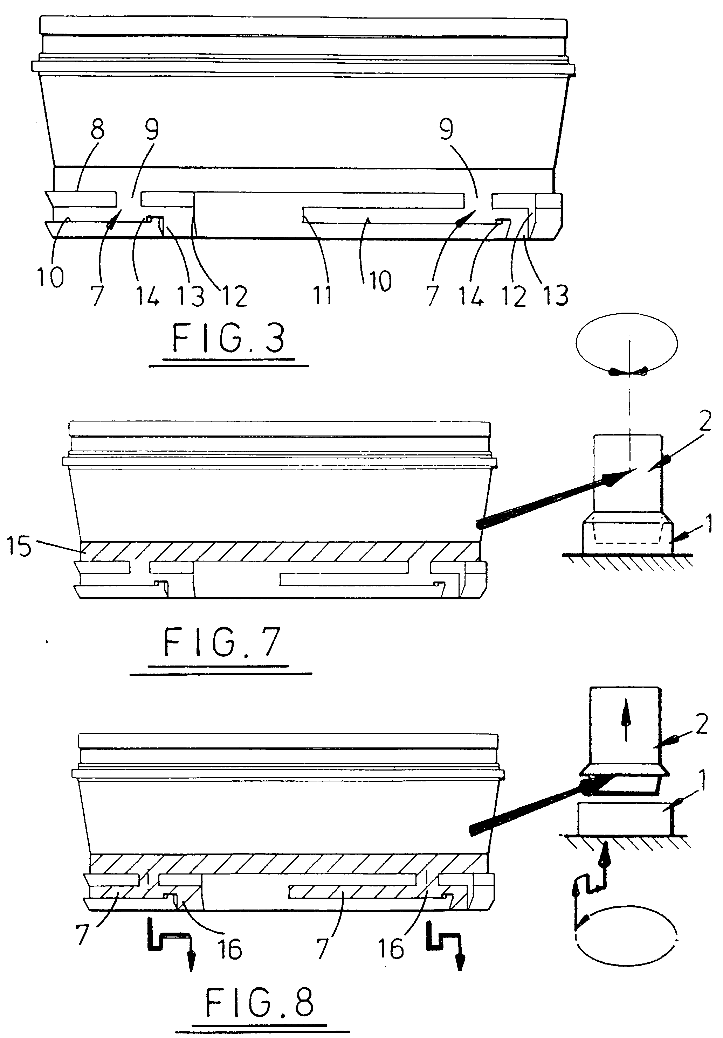

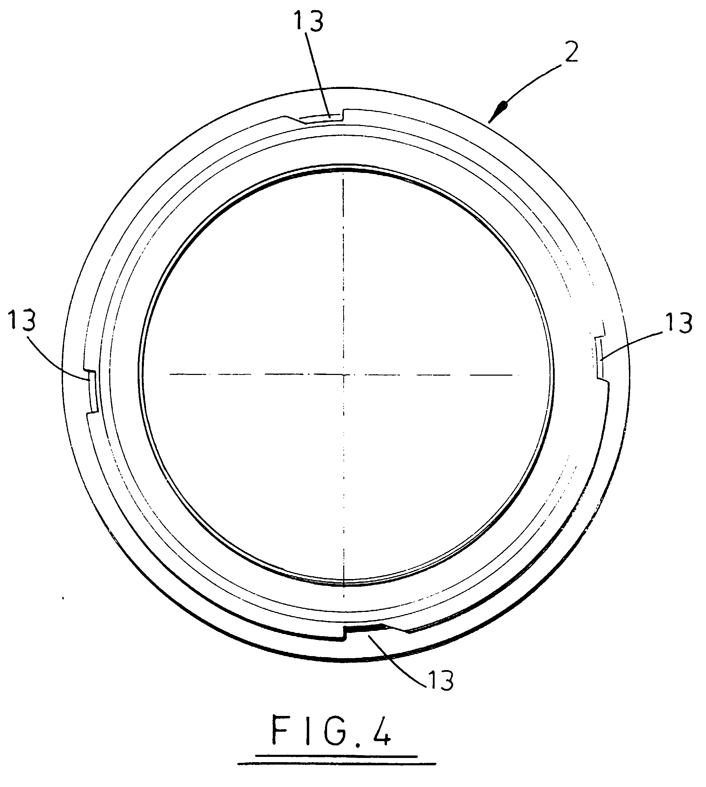

The lower end of the body portion 2 is shown in side view in Fig. 3 and is moulded with integral locking formations comprising a circumferential shoulder 8 providing a barrier to axial movement of the projections 5 save at four equally spaced entry gates 9 giving access to the respective labyrinths 7. Each labyrinth 7 includes a part-circumferential shoulder 10 providing a further barrier to axial movement of the projections 5 and axially extending abutment surfaces 11, 12 providing barriers to circumferential movement of the projection 5 in opposite directions in its respective labyrinth 7. Adjacent its abutment surface 12 each labyrinth 7 has an exit gate 13 (see also Fig. 4) and adjacent the gate 13 each shoulder 10 has a step 14 providing a further partial barrier to circumferential movement of the respective projection 5.

In order to open the litter bin for the purpose of removing and emptying the litter container therein the upper body portion 2 of the bin may be rotated clockwise or anticlockwise to bring the entry gates 9 into alignment with the projections 5. This may be done either by aligning discrete marks (not shown) on the base portion 1 and upper body portion 2 or by rotating the upper body portion 2 in either direction whilst simultaneously applying a lifting force until engagement of the projections 5 in the gates 9 is felt. A straight upward lift of the upper body portion 2 then allows the projections 5 to pass through the entry gates 9 into the respective labyrinths 7 where they abut the shoulders 10 to prevent further lifting movement. The upper body portion 2 can then be rotated almost a quarter of a turn anticlockwise until the projections 5 encounter the axially extending abutment surfaces 11. Alternatively, in order to separate the body portions, a small clockwise rotation is possible until the steps 14 adjacent the exit gates 13 are encountered by the projections 5. In order to pass the partial barriers to circumferential movement provided by the steps 14 the upper body portion 2 must be lowered slightly back into engagement with the base portion 1 and then rotated clockwise until the axial abutment surfaces 12 are contacted by the projections 5. In this position each projection 5 is aligned with a respect exit gate 13 and the upper body portion may be lifted free. Figs. 7 and 8 show the grooves in which the projections 5 locate. The cross-hatched groove 15 shown in Fig. 7 is engaged by the projections 5 in the fully inserted position of the upper body portion 2 in the base portion 1 (see inset). As indicated by the double-headed circular arrow in the inset of Fig. 7 the upper body portion is capable of rotation through 360° in either direction relative to the base portion 1. In Fig. 8, the locating grooves in the labyrinths 7 are additionally shown cross-hatched and the arrows 16 show possible exit paths for the projections 5. The inset of Fig. 8 shows the upper body portion 2 being lifted clear of the base portion 1 with the exit path of the projections indicated by the line with arrow heads at the bottom of the inset.

After the litter bin has been opened in the manner described, and the litter container has been removed, emptied and replaced, the upper body portion 2 may be re-inserted in the base 1 by simply lowering it into the base 1 in any orientation thereof. The projections 5 temporarily deflect into their retracted positions under the influence of the protruding shoulder portions at the lower end 2a of the upper body portion 2. As the shoulder 8 passes the free ends of the projections 5 the projections 5 snap back into their fully projecting positions in engagement with the peripheral groove 15.

It will be appreciated that numerous modifications may be made without departing from the scope of the invention as defined in the attached claims. The number of projections 5 and corresponding labyrinths 7 may be increased or reduced. In the embodiment described above, the projections 5 and labyrinth 7 are evenly spaced thus permitting four equiangularly spaced start positions for the separation movement (i.e. each of the projections 5 can enter any of the labyrinths 7 through the respective entry gate 9). In an alternative design the projections 5 and labyrinths 7 are unevenly spaced or sized so as to permit only one or possibly two such start positions. The projections 5 may be fabricated in metal, e.g. spring steel. The litter bin may be made of alternative materials, e.g. metal, and in a variety of different shapes provided that the interengaging components are of generally cylindrical form to permit relative rotation of the two parts of the litter bin. A simpler or more complex labyrinth structure may be provided although the described design affords a reasonable compromise between complexity deterring unauthorised removal of the upper portion of the litter bin and simplicity permitting easy removal by authorised personnel. The arrangement may be reversed with the locking formations provided on the base and the retractable projections mounted on the removable body portion. In this case the projections will be inclined upwardly from their mountings in order to ride over the locking formations during the insertion movement.

## Claims

1. An assembly comprising two interfitting generally cylindrical components (1, 2) having sufficient clearance between their mating surfaces to permit relative rotation, at least one retractable locking projection (5) provided on one of said surfaces and biased into a projecting position in which it interlocks with the other of said surfaces, and locking formations (8) on said other surface including at least one corresponding labyrinth (7) of barriers to circumferential and axial movement through which labyrinth(s) (7) said projection(s) (5) may be manoeuvred by a known sequence of axial and rotational relative movements of said components for disengagement thereof, the arrangement of the projection(s) and the locking formations (8) being such that said axial disengaging movement cannot cause retraction of the projection(s) (5) but axial movement in the reverse direction results in temporary deflection of the projection(s) (5) into the retracted position by the locking formations (8) thereby permitting re-engagement of the components to be accomplished by relative axial movement alone, characterised in that the or each projection (5) has a contact surface inclined in the direction of engagement movement of the locking formations (8) so as to enable the locking formations to exert a progressively increasing deflection force on the projection(s) (5) during engagement, the or each projection (5) having a free end for engagement with the mating surface and being mounted with axial spacing from said free end, the or each projection (5) having mounting means (5b, c) at the end opposite said free end and a hinge (5e) intermediate its ends, the hinge (5e) interconnecting relatively moveable portions (5a, 5d) of the projection(s) (5), and having interlocking formations (5f, 5g) that serve to limit the extent of the projecting position of the projection(s) (5).

2. An assembly as claimed in claim 1, wherein the or each projection is integrally moulded in plastics material.

3. An assembly according to claim 2, wherein the interlocking formations (5f, 5g) of the projection(s) (5) limit the relative lateral movement of the adjacent ends.

4. An assembly as claimed in any one of the preceding claims, wherein a plurality of projections (5) and corresponding labyrinths (7) are unevenly spaced circumferentially so as to provide a limited number (less than said plurality) of start points for disengagement of said components.

5. An assembly as claimed in any one of the preceding claims, wherein the hinge 5e or each projection (5) is axially and radially offset from an engaging end of the projection such that separating movement of the components causes limited reverse deflection of the projection into close engagement with the cooperating locking formation (8).

6. An assembly as claimed in any one of the preceding claims, wherein the or each projection (5) is mounted on a strengthened part of the respective surface to prevent distortion of said surface if separation of the components is attempted by force.

7. A litter bin comprising a hollow body made from an assembly as claimed in any one of the preceding claims, the cylinder axis of said components being arranged vertically and one of said components providing a base into or over which the other component fits.

## Patentansprüche

1. Baugruppe bestehend aus zwei ineinander passenden, im allgemeinen zylindrischen Komponenten (1, 2), die einen ausreichenden Abstand zwischen ihren Berührungsflächen haben, so daß eine relative Drehung möglich ist, mindestens einem zurückführbaren Verriegelungsvorsprung (5) an einer der genannten Flächen, der in eine hervorstehende Stellung vorgespannt ist, in der er mit der anderen der genannten Flächen verriegelt, und Verriegelungsgebilde (8) an der genannten anderen Fläche mit mindestens einem korrespondierenden Labyrinth (7) von Barrieren gegen Bewegungen in Umfangs- und axialer Richtung, wobei durch dieses Labyrinth bzw. diese Labyrinthe (7) der genannte Vorsprung bzw. die genannten Vorsprünge (5) mit einer bekannten Abfolge von axialen und drehenden relativen Bewegungen der genannten Komponenten geführt werden kann bzw. können, um sie außer Eingriff zu bringen, wobei die Anordnung des Vorsprungs bzw. der Vorsprünge und der Verriegelungsgebilde (8) derart ist, daß die genannte axiale Bewegung zum Außer-Eingriff-Bringen kein Zurückführen des Vorsprungs bzw. der Vorsprünge (5) bewirken kann, daß aber eine axiale Bewegung in der entgegengesetzten Richtung eine vorübergehende Biegung des Vorsprungs bzw. der Vorsprünge (5) in die zurückgeführte Stellung durch die Verriegelungsgebilde (8) ergibt, wodurch ein Wiedereingriff der Komponenten möglich ist, die durch eine relative nur axiale Bewegung erzielbar ist, dadurch gekennzeichnet, daß der oder jeder Vorsprung (5) eine Kontaktfläche aufweist, die in der Richtung der Eingriffsbewegung der Verriegelungsgebilde (8) geneigt ist, um die Verriegelungsgebilde in die Lage zu versetzen, eine stetig zunehmende Biegekraft auf den Vorsprung bzw. die Vorsprünge (5) beim Eingreifen auszuüben, wobei der oder jeder Vorsprung (5) ein freies Ende für den Eingriff mit der Berührungsfläche aufweist und mit einem axialen Abstand vom genannten freien Ende angebracht ist, wobei der oder jeder Vorsprung (5) ein Befestigungsmittel (5b, c) an dem Ende gegenüber dem genannten freien Ende und ein Gelenk (5e) zwischen seinen Enden aufweist, wobei das Gelenk (5e) relativ bewegliche Abschnitte (5a, 5d) des Vorsprungs bzw. der Vorsprünge (5) miteinander verbindet und Eingriffsgebilde (5f, 5g) aufweist, die zum Begrenzen des Ausmaßes der hervorstehenden Stellung des Vorsprungs bzw. der Vorsprünge (5) dienen.

2. Baugruppe nach dem Anspruch 1, wobei der oder jeder Vorsprung integriert in Kunststoffmaterial geformt ist.

3. Baugruppe nach dem Anspruch 2, wobei die Eingriffsgebilde (5f, 5g) des Vorsprungs bzw. der Vorsprünge (5) die relative seitliche Bewegung der nebeneinander befindlichen Enden begrenzen.

4. Baugruppe nach einem der vorstehenden Ansprüche, wobei eine Mehrzahl von Vorsprüngen (5) und korrespondierenden Labyrinthen (7) in ungleichen Abständen in Umfangsrichtung angeordnet sind, um eine begrenzte Anzahl (weniger als die genannte Mehrzahl) von Anfangspunkten für das Außer-Eingriff-Bringen der genannten Komponenten zu ergeben.

5. Baugruppe nach einem der vorstehenden Ansprüche, wobei das Gelenk 5e oder jeder Vorsprung (5) in axialer und radialer Richtung von einem Eingriffsende des Vorsprungs versetzt ist, so daß die Trennbewegung der Komponenten eine begrenzte Rückwärtsbiegung des Vorsprungs in einen engen Eingriffs mit dem zusammenwirkenden Verriegelungsgebilde (8) bewirkt.

6. Baugruppe, nach einem der vorstehenden Ansprüche, wobei der oder jeder Vorsprung (5) an einem verstärkten Teil der jeweiligen Fläche befestigt ist, um eine Verzerrung der genannten Fläche zu verhindern, wenn die Trennung der Komponenten unter Kraftaufwand versucht wird.

7. Abfalleimer bestehend aus einem hohlen Körper, der aus einer Baugruppe nach einem der vorstehenden Ansprüche hergestellt ist, wobei die Zylinderachse der genannten Komponenten vertikal angeordnet ist und einer der genannten Komponenten einen Grundteil bildet, in den oder über den die andere Komponente paßt.

## Revendications

1. Assemblage comprenant deux composants généralement cylindriques (1, 2) s'emboîtant l'un dans l'autre, dont l'espace libre ménagé entre leurs surfaces de jointement est suffisant pour permettre leur rotation relative, au moins une saillie de verrouillage rétractable (5) prévue sur une desdites surfaces et mise en état de précontrainte dans une position saillante dans laquelle elle vient se verrouiller de manière réciproque avec l'autre desdites surfaces, ainsi que des structures de verrouillage (8) sur ladite autre surface englobant au moins un labyrinthe correspondant (7) de dispositifs d'arrêt s'opposant au mouvement axial et circonférentiel, la ou lesdites saillies (5) étant à même d'être manoeuvrée(s) à travers le ou lesdits labyrinthes (7) via une séquence connue de mouvements relatifs desdits composants en direction axiale et en rotation pour leur désengrènement, l'arrangement de la ou desdites saillies et des structures de verrouillage (8) étant tel que ledit mouvement de désengrènement axial ne peut provoquer la rétraction de la ou des saillies (5), tandis que le mouvement axial dans la direction opposée donne lieu à un fléchissement temporaire de la ou des saillies (5) dans la position rétractée via les structures de verrouillage (8) pour permettre la mise en oeuvre du réengrènement des composants via uniquement un mouvement axial relatif, caractérisé en ce que la ou chaque saillie (5) possède une surface de contact inclinée dans la direction de mouvement d'engrènement des structures de verrouillage (8) de façon à permettre aux structures de verrouillage d'exercer une force de fléchissement qui augmente progressivement sur la ou les saillies (5) au cours de l'engrènement, la ou chaque saillie (5) possédant une extrémité libre à des fins d'engrènement avec la surface de jointement et étant montée avec un écartement axial par rapport à ladite extrémité libre, la ou chaque saillie (5) possédant des moyens de montage (5b,c) à l'extrémité opposée de ladite extrémité libre et une articulation (5e) au milieu de ses extrémités, l'articulation (5e) reliant l'une à l'autre des portions (5a, 5d) de la ou des saillies (5), mobiles l'une par rapport à l'autre, et possédant des structures de verrouillage réciproque (5f, 5g) qui servent à limiter l'étendue de la position saillante de la ou des saillies (5).

2. Assemblage selon la revendication 1, dans lequel la ou chaque saillie est moulée pour faire partie intégrante d'une matière plastique.

3. Assemblage selon la revendication 2, dans lequel les structures de verrouillage réciproque (5f, 5g) de la ou des saillies (5) limitent le mouvement latéral relatif des extrémités adjacentes.

4. Assemblage selon l'une quelconque des revendications précédentes, dans lequel un certain nombre de saillies (5) et de labyrinthes correspondants (7) sont espacés de manière inéqale en direction circonférentielle de façon à procurer un nombre limité (inférieur audit nombre) de points de départ pour le désengrènement desdits composants.

5. Assemblage selon l'une quelconque des revendications précédentes, dans lequel l'articulation 5e ou chaque saillie (5) est décalée en direction axiale et en direction radiale par rapport à une extrémité d'engrènement de la saillie, si bien que le mouvement de séparation des composants donne lieu à un fléchissement inverse limité de la saillie en enqrènement étroit avec la structure de verrouillage coopérante (8).

6. Assemblage selon l'une quelconque des revendications précédentes, dans lequel la ou chaque saillie (5) est montée sur une partie renforcée de la surface respective pour empêcher la déformation de ladite surface si l'on tente de séparer les composants par force.

7. Poubelle comprenant un corps creux constitué d'un assemblage selon l'une quelconque des revendications précédentes, l'axe cylindrique desdits composants étant arrangé à la verticale et un desdits composants procurant une base dans laquelle ou par-dessus laquelle s'emboîte l'autre composant.
